Europäisches Patentamt

European Patent Office

Office européen des brevets

(19)

(11) Numéro de publication : **0 089 292**
**B1**

## FASCICULE DE BREVET EUROPÉEN

(12)

(45) Date de publication du fascicule du brevet :
09.10.85

(51) Int. Cl.⁴ : **B 62 D   5/08**

(21) Numéro de dépôt : **83400532.4**

(22) Date de dépôt : **15.03.83**

(54) **Système de direction assistée.**

(30) Priorité : **15.03.82 FR 8204330**

(43) Date de publication de la demande :
**21.09.83 Bulletin 83/38**

(45) Mention de la délivrance du brevet :
**09.10.85 Bulletin 85/41**

(84) Etats contractants désignés :
**DE FR GB IT**

(56) Documents cités :
**FR-A- 1 172 822**
**FR-A- 2 382 361**
**GB-A- 1 202 397**
**GB-A- 2 056 928**
**US-A- 4 030 403**

(73) Titulaire : **BENDIX France**
**Centre Paris Pleyel**
**F-93521 St-Denis Cedex 01 (FR)**

(72) Inventeur : **Tanguy, Christian**
**34Bis Avenue Gaston Bourry**
**F-95740 Frepillon (FR)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

La présente invention concerne les systèmes hydrauliques à distributeur du type à centre fermé, plus particulièrement mais non exclusivement les systèmes de direction à assistance hydraulique de véhicules, et plus spécifiquement un dispositif réducteur de pression destiné à être interposé, dans un tel système hydraulique, entre un générateur de pression et une valve de distribution à centre fermé commandant un moteur hydraulique d'assistance, du type comprenant un corps, un tiroir de réducteur monté à coulissement axial dans un alésage du corps et comportant deux portées séparées par une zone de diamètre réduit agencée pour coopérer avec un orifice d'entrée, destiné à être relié au générateur de pression, et un orifice de sortie, destiné à être relié à la valve de distribution, débouchant dans l'alésage en des endroits axialement espacés, le tiroir de réducteur délimitant dans l'alésage, une chambre d'équilibrage communiquant avec la zone de diamètre réduit, et étant sollicité, dans la direction vers la chambre d'équilibrage, en permanence par un ressort et sélectivement, lors de la mise en œuvre de la valve de distribution, par une pression image de la pression du liquide délivré par la valve au moteur hydraulique et régnant dans une chambre de commande à laquelle est exposé le tiroir de réducteur.

Un dispositif réducteur du type sus-mentionné est décrit dans le document GB-A-2056928, et permet de réduire, dans les conditions de repos de la valve de distribution à centre fermé, la pression effective à l'entrée de cette valve dans la condition de repos.

Le dispositif réducteur décrit dans ce document est du type à deux voies et doit être associé à une soupape réductrice de pression interposée dans une canalisation entre l'orifice de sortie du réducteur et la chambre de commande et munie d'un ressort taré à une valeur légèrement supérieure à celle du ressort de sollicitation du tiroir de réducteur, ce qui s'avère, dans la pratique, très délicat à réaliser. De plus, dans un tel réducteur à deux voies, lors de la régulation en réduction de pression, le liquide en excès sous haute pression est évacué via ladite soupape réductrice, les conduits d'alimentation du moteur hydraulique et la valve de distribution, soumettant ainsi l'ensemble du système à des chocs hydrauliques.

La présente invention a pour objet de proposer un agencement de dispositif réducteur de pression obviant à ces inconvénients et agencé pour constituer un dispositif du type à trois voies permettant un retour direct du liquide en excès sous haute pression vers le réservoir, assurant ainsi, qu'au repos, la pression à l'entrée de la valve de distribution soit maintenue à une valeur réduite.

Pour ce faire, selon l'invention, le corps du dispositif réducteur de pression comprend un orifice d'échappement, destiné à être relié à un réservoir basse pression, débouchant dans l'alésage à un endroit axialement espacé de l'orifice de sortie, celui-ci se trouvant situé axialement entre l'orifice d'entrée et l'orifice d'échappement, l'orifice d'échappement et l'orifice de sortie étant séparés d'une distance axiale supérieure à la longueur de la zone de diamètre réduit.

D'autre part, dans le cas spécifique d'un système de direction assistée à vérin d'assistance double effet, le système du document GB-A-2056928 nécessite, entre les conduits alimentant les chambres respectives du vérin, un clapet inverseur auquel est relié directement la chambre de commande.

La présente invention a pour autre objet de proposer un dispositif réducteur de pression du type défini ci-dessus, de construction simple et ramassée se présentant sous la forme d'une unité opérante complète.

Pour ce faire, selon une autre caractéristique de l'invention, le dispositif comprend, définies dans l'alésage, une première et une seconde chambres de commande reliées aux sorties respectives de la valve de distribution vers les chambres du moteur hydraulique, la seconde chambre de commande étant avantageusement adjacente au tiroir de réducteur, la première chambre de commande étant espacée axialement de la seconde chambre dans la direction opposée au tiroir de réducteur et séparée de cette dernière par un tiroir de commande pourvu d'un prolongement s'étendant dans la seconde chambre de commande vers le tiroir de réducteur.

L'invention sera maintenant décrite en se référant aux dessins annexés dans lesquels :

La figure 1 est une vue schématique d'un système de direction assistée classique sans réducteur de pression ;

La figure 2 est une vue schématique d'un système de direction assistée incorporant un dispositif réducteur de pression selon l'invention, et

La figure 3 est une vue en coupe détaillée du dispositif réducteur de pression de la Figure 2.

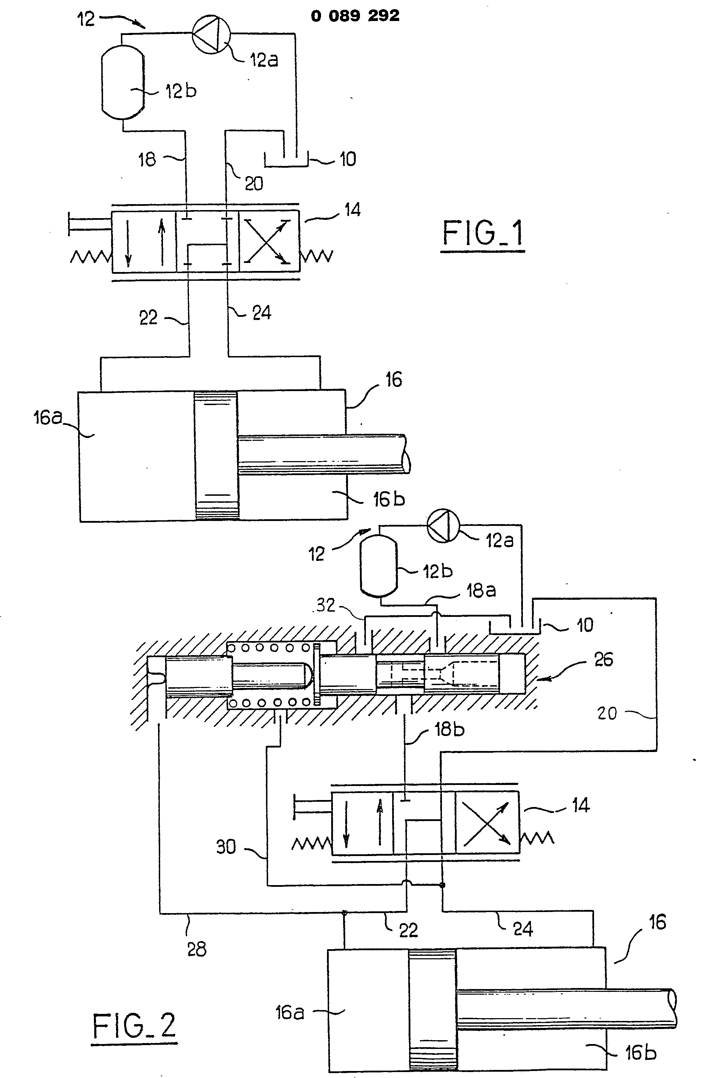

Le système de direction assistée représenté à la Figure 1 se compose principalement d'un réservoir de liquide basse pression 10, d'un ensemble générateur de pression 12 constitué, par exemple, d'une pompe 12a et d'un accumulateur 12b, d'une valve de distribution 14, du type à quatre voies et à « centre fermé », et d'un vérin d'assistance 16 à deux chambres 16a et 16b.

Entre ces éléments sont prévus divers conduits :

un conduit 18 entre le générateur 12 et la valve 14,

un conduit 20 entre la valve 14 et le réservoir 10, et

deux conduits 22 et 24 entre la valve 14 et les deux chambres 16a et 16b du vérin.

En ce qui concerne la valve de distribution, on pourra par exemple choisir une valve du type décrit dans le brevet FR 2 382 361 dans lequel une chemise est montée rotative à l'intérieur d'un corps de valve, et un certain nombre de joints tournant sont placés entre la chemise et le corps pour définir quatre canalisations qui sont reliées aux conduits précités.

La valve est du type à « centre fermé », et construite de manière qu'au repos,

la canalisation reliée au conduit 18 et au générateur de pression est obturée ; il y règne par conséquent la même pression qu'au refoulement du générateur,

la canalisation reliée au conduit 20 et au réservoir est, par définition, à la même pression que le réservoir (en général il s'agit de la pression atmosphérique),

les deux canalisations reliées aux conduits 22 et 24 et aux chambres du vérin sont en communication avec la canalisation précédente, il y règne donc la pression qui prévaut le réservoir.

L'on se reportera maintenant à la Figure 2 qui représente un système de direction assistée pourvu d'un dispositif réducteur de pression conforme à l'invention.

On retrouve dans le système de la Figure 2 le générateur de pression 12, la valve 14, le vérin 16 et les conduits 18, 20, 22 et 24 décrits en relation avec la Figure 1.

Conformément à l'invention, il est prévu un réducteur de pression 26 interposé entre le générateur 12 et la valve 14 dans le conduit d'alimentation 18, ce dernier étant ainsi décomposé en deux tronçons : le premier 18a en liaison avec le générateur et le second 18b en liaison avec la valve 14. Le réducteur 26 est également relié aux conduits 22 et 24 par des tubes 28 et 30 et au réservoir 10 par un tube 32.

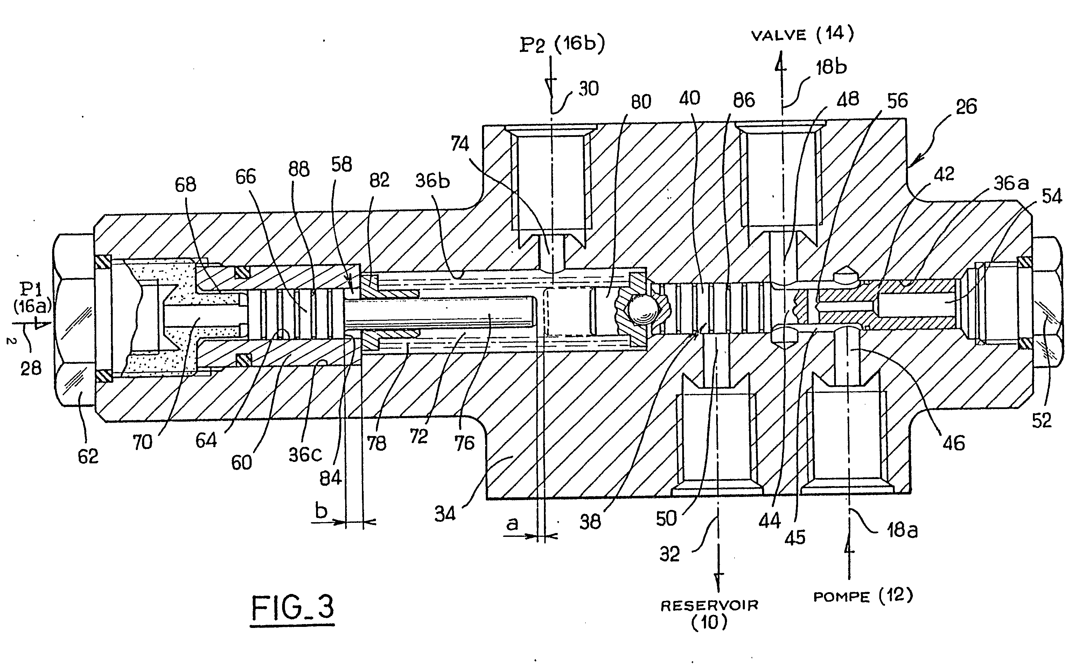

La structure détaillée du réducteur apparaît à la Figure 3. Il comporte un corps 34 percé d'un alésage 36 formé de trois parties successives de diamètre croissant 36a, 36b et 36c.

Dans la partie de plus petit diamètre, 36a, est monté coulissant un tiroir de réducteur 38 formé de deux portées 40 et 42, au diamètre de la partie d'alésage 36a et séparées par une zone de diamètre réduit 44. Cette dernière limite une chambre annulaire 45 avec l'alésage. Dans cette partie d'alésage débouchent trois orifices : un orifice d'entrée 46 relié au tronçon de conduit 18a, un orifice de sortie 48 relié au tronçon de conduit 18b, et un orifice d'échappement 50 relié au tube 32.

L'orifice de sortie 48 est situé axialement entre les deux autres et la distance qui sépare les bords voisins des deux orifices d'entrée 46 et d'échappement 50 est légèrement supérieure à la longueur de la zone de diamètre réduit du tiroir 38. Entre le tiroir 38 et un bouchon de fermeture 52 fixé à l'extrémité de l'alésage 36a est définie une chambre d'équilibrage 54 qui communique avec la zone de diamètre réduit 44 du tiroir via un passage 56 ménagé dans le tiroir.

A l'opposé du tiroir le boîtier abrite un ensemble de commande 58 composé comme suit : une douille 60 est fixée dans la partie de plus grand diamètre 36c de l'alésage 36 et bloquée en position par un bouchon 62. L'ouverture centrale 64 de la douille 60 a le même diamètre que la partie d'alésage 36a et reçoit en coulissement un tiroir de commande 66.

Ainsi se trouvent définies deux chambres de commande : la première 68 est située entre le tiroir 66 et le bouchon 62 et reliée au tube 28, c'est-à-dire à la chambre 16a du vérin, via un orifice 70 prévu dans le bouchon 62, et la seconde 72 est située entre le tiroir 66 et le tiroir 38 et reliée au tube 30, c'est-à-dire à la chambre 16b du vérin via un orifice 74 prévu dans le boîtier à la hauteur de la partie d'alésage intermédiaire 36b.

Le tiroir de commande 66 comporte un prolongement axial 76 en direction du tiroir 38. Un ressort 78 est monté dans la seconde chambre de commande 72 autour du prolongement 76 et prend appui d'une part sur le tiroir 38 via un poussoir 80 et d'autre part sur une collerette 82 entourant le prolongement 76 du tiroir 66 et prenant appui sur la douille 60.

Le réducteur de pression fonctionne de la manière suivante : la pression de refoulement du générateur est admise à l'orifice 46 et à la chambre annulaire 45, puis via le passage 56 à la chambre d'équilibrage 54.

Lorsque la valve 14 est au repos comme exposé plus haut, la canalisation d'entrée de la valve 14 est obturée, et les canalisations de liaison aux chambres de vérin sont en liaison avec le réservoir.

Dans cette situation, la basse pression du réservoir prévaut également dans les deux chambres de commande 68 et 72, le tiroir de commande 66 demeurant dans la position représentée.

Sous l'effet de la pression d'entrée le tiroir de réducteur 38 se déplace vers la chambre 72 en comprimant le ressort. Au cours de ce déplacement, la position de la chambre annulaire 45 est modifiée et, par coopération entre l'orifice d'entrée 46 et l'orifice d'échappement 50, il s'établit dans cette chambre une pression réduite et le tiroir 38 atteint une position d'équilibre dans laquelle cette pression réduite est fonction de la force exercée par le ressort 78. Par conséquent, la canalisation d'alimentation de la valve 14 recevra une pression réduite et les frottements induits par les joints tournant seront ramenés à une faible valeur.

On notera que dans la position d'équilibre du tiroir 38, le poussoir 80 (représenté en pointillé) est à courte distance « a » du prolongement 76. Cette distance est plus courte que la distance « b » qui sépare l'épaulement 84 du tiroir 66 et la collerette 82.

Lorsque la valve 14 est mise en œuvre, en vue d'un virage à gauche, par exemple, la canalisation de liaison à la chambre de vérin 16a est isolée du réservoir et mise en communication avec la canalisation d'alimentation.

Il s'ensuit une augmentation de pression dans la chambre de vérin 16a ainsi que dans la première chambre de commande 68 du réducteur 26. Le tiroir de commande 66 se déplace alors en direction du tiroir de réducteur 38 sans comprimer le ressort 78, pour venir engager le poussoir 80.

La force additionnelle ainsi exercée par le tiroir de commande 66 sur le tiroir 38 ramène celui-ci vers la chambre 54 jusqu'à rétablir la communication entre la chambre annulaire 45 et l'orifice 46. Par suite, la pression admise à la valve 14 via l'orifice de sortie 48 augmente, de même que la pression transmise par la valve 14 à la chambre de vérin 16a pour assurer une pleine assistance au système de direction. Le tiroir 38 atteint une nouvelle position d'équilibre fonction de la pression transmise par la valve 14 à la chambre de vérin 16a.

Lorsque la valve 14 est ramenée au repos, les deux chambres de vérin et les deux chambres de commande 68 et 72 sont mises en communication avec le réservoir et le tiroir retourne à sa première position d'équilibre dans laquelle la pression transmise à la valve 14 est notablement réduite.

Lors d'une mise en œuvre opposée de la valve 14, en vue d'un virage à droite par exemple, le réducteur 26 fonctionne de la même manière, à ceci près que l'augmentation de pression dans la seconde chambre de commande 72 provoque directement une force hydraulique sur le tiroir 38, le tiroir de commande 66 restant dans sa position rétractée.

Pour réduire les frottements entre les tiroirs du réducteur et le boîtier, ces deux tiroirs ne sont pas pourvus de joints. De préférence, on prévoit un certain nombre de gorges de détente 86, 88 qui permettent d'éviter le collage des tiroirs dans leurs alésages respectifs.

Ainsi le temps de réponse du réducteur sera maintenu aussi faible que possible.

## Revendications

1. Dispositif réducteur de pression destiné à être interposé entre un générateur de pression hydraulique (12) et une valve de distribution (14) à centre fermé commandant un moteur hydraulique d'assistance (16), notamment dans un système de direction assistée, comprenant : un corps (34), un tiroir de réducteur (38) monté à coulissement axial dans un alésage (36) du corps et comportant deux portées (40 ; 42) séparées par une zone de diamètre réduit (44) agencée pour coopérer avec un orifice d'entrée (46), destiné à être relié au générateur de pression, et un orifice de sortie (48), destiné à être relié à la valve de distribution, débouchant dans l'alésage en des endroits axialement espacés, le tiroir de réducteur délimitant, dans l'alésage, une chambre d'équilibrage (54) communiquant avec la zone de diamètre réduit, et étant sollicité, dans la direction vers la chambre d'équilibrage, en permanence par un ressort (78) et sélectivement, lors de la mise en œuvre de la valve de distribution, par une pression image de la pression du liquide délivré par la valve au moteur hydraulique et régnant dans une chambre de commande (68 ; 72) à laquelle est exposé le tiroir de réducteur, caractérisé en ce que le corps comprend un orifice d'échappement (50), destiné à être relié à un réservoir basse pression (10), débouchant dans l'alésage à un endroit axialement espacé de l'orifice de sortie (48), celui-ci se trouvant situé axialement entre l'orifice d'entrée et l'orifice d'échappement, l'orifice d'échappement et l'orifice de sortie étant séparés d'une distance axiale supérieure à la longueur de la zone de diamètre réduit (44).

2. Dispositif selon la revendication 1, caractérisé en ce qu'il comprend, définie dans l'alésage (36), au moins une chambre de commande (68 ; 72) destinée à être reliée à une sortie (22 ; 24) de la valve de distribution (14) vers le moteur hydraulique (16).

3. Dispositif selon la revendication 2 pour moteur hydraulique à double effet, caractérisé en ce qu'il comprend, définies dans l'alésage (36), une première (68) et une seconde (72) chambres de commandes reliées aux sorties respectives (22 ; 24) de la valve de distribution vers les chambres (16a, 16b) du moteur hydraulique.

4. Dispositif selon la revendication 3, caractérisé en ce que la seconde chambre de commande (72) est adjacente au tiroir de réducteur (38), la première chambre de commande (68) étant espacée axialement de la seconde chambre dans la direction opposée au tiroir de réducteur et séparée de cette dernière par un tiroir de commande (66) pourvu d'un prolongement (76) s'étendant dans la seconde chambre de commande vers le tiroir de réducteur.

5. Dispositif selon la revendication 4, caractérisé en ce que le ressort (78) est disposé dans la seconde chambre de commande (72) et prend appui sur un épaulement de l'alésage (36) via une collerette (82) entourant le prolongement (76).

6. Dispositif selon la revendication 5, caractérisé en ce que le tiroir de réducteur (38) et le tiroir de commande (66) comportent chacun des gorges périphériques de détente (86 ; 88).

## Claims

1. Pressure reducing apparatus to be interposed between a hydraulic pressure generator (12) and a distribution valve (14) of the closed center type, controlling a hydraulic servo motor (16) in particular in a servo steering system, comprising : a body (34), a reduction spool (38) axially slidingly mounted in a bore (36) of the body member and comprising a pair of lands (40 ; 42) separated by an area of reduced diameter (44) adapted to cooperate with an inlet orifice (46) to be connected to the pressure generator and an outlet orifice (48) to be connected to the distribution valve, opening into the bore at axially spaced areas, the reducing spool delimiting in the bore a balancing chamber (54) communicating with the area of reduced diameter and being biased towards the balancing chamber permanently by a spring (78) and selectively, during operation of the distribution valve, by a pressure representing the pressure of the liquid delivered by the valve to the hydraulic motor and prevailing in a control chamber (68 ; 72) to which the reduction spool is exposed, characterized in that the body comprises an exhaust orifice (50) to be connected to a low pressure reservoir (10) and opening into the bore at an area axially spaced from the outlet orifice (48), the latter being disposed axially between the inlet orifice and the exhaust orifice, the exhaust orifice and the outlet orifice being separated by an axial distance greater than the length of the area of reduced diameter (44).

2. Apparatus according to claim 1, characterized in that it comprises at least one control chamber (68 ; 72) defined in the bore (36) and to be connected to an outlet (22 ; 24) of the distribution valve (14) to the hydraulic motor (16).

3. Apparatus according to claim 2 for a double acting hydraulic motor, characterized in that it comprises first (68) and second (72) control chambers defined in the bore (36) and connected to respective outlets (22 ; 24) of the distribution valve to the chambers (16a, 16b) of the hydraulic motor.

4. Apparatus according to claim 3, characterized in that the second control chamber (72) is adjacent to the reduction spool (38), the first control chamber (68) being axially spaced from the second chamber in the direction opposite to the reduction spool and separated from the latter by a control spool (66) provided with an extension (76) extending into the second control chamber towards the reduction spool.

5. Apparatus according to claim 4, characterized in that the spring (78) is disposed in the second control chamber (72) and is in abutment with a shoulder of the bore (36) via a collar (82) surrounding the extension (76).

6. Apparatus according to claim 5, characterized in that the reduction spool (38) and the control spool (66) each comprise peripheral grooves (86 ; 88).

## Patentansprüche

1. Druckmindervorrichtung, die zwischen einem hydraulischen Druckerzeuger (12) und einem Verteilerventil (14) mit geschlossener Mitte angeordnet ist, das einen hydraulischen Servomotor (16), insbesondere in einer Servolenkanlage, steuert, mit einem Körper (34), einem Druckminderschieber (38), der in einer Bohrung (36) des Körpers axial gleitend gelagert ist und zwei Abschnitte (40 ; 42) aufweist, die durch einen Bereich verringerten Durchmessers (44) getrennt sind, der mit einer am Druckerzeuger anschließbaren Einlaßöffnung (46) und einer am Verteilerventil anschließbaren Auslaßöffnung (48) zusammenwirkt, die in der Bohrung an axial beabstandeten Stellen münden, wobei der Druckminderschieber in der Bohrung eine mit dem Bereich verringerten Durchmesser verbundene Ausgleichskammer (54) begrenzt und in der Richtung der Ausgleichskammer ständig durch eine Feder (78) und wahlweise, bei Betrieb des Verteilerventils, durch einen Druck vorgespannt wird, der den vom Ventil an den hydraulischen Servomotor abgegebenen Flüssigkeitsdruck widerspiegelt und der in einer Steuerkammer (68 ; 72) herrscht, der der Druckminderschieber ausgesetzt ist, dadurch gekennzeichnet, daß der Körper eine mit einem Niederdruckreservoir (10) zu verbindende Auslaßöffnung (50) aufweist, die in der Bohrung an einer zur Auslaßöffnung (48) axial beabstandeten Stelle mündet, wobei sich die Auslaßöffnung axial zwischen der Einlaßöffnung und der Ablaßöffnung befindet und wobei die Ablaßöffnung und die Auslaßöffnung einen axialen Abstand voneinander haben, der größer ist als die Länge des Bereiches verlängerten Durchmessers (44).

2. Vorrichtung nach Anspruch 1, dadurch gekennzeichnet, daß sie mindestens eine in der Bohrung (36) gebildete Steuerkammer (68 ; 72) aufweist, die mit einem Auslaß (22 ; 24) der Verteilerventils (14) zum hydraulischen Motor (16) hin verbindbar ist.

3. Vorrichtung nach Anspruch 2 für einen doppelt wirkenden hydraulischen Motor, dadurch gekennzeichnet, daß sie eine erste (68) und eine zweite (72) Steuerkammer, gebildet in der Bohrung (36), aufweist, die an den entsprechenden Auslässen (22 ; 24) des Verteilerventils zu den Kammer (16a, 16b) des hydraulischen Motors angeschlossen sind.

4. Vorrichtung nach Anspruch 3, dadurch gekennzeichnet, daß die zweite Steuerkammer (72) an den Druckminderschieber (38) angrenzt, wobei die erste Steuerkammer (68) axial beabstandet ist zur zweiten Kammer in der dem Druckminderschieber entgegengesetzten Richtung und getrennt ist von dem letzteren durch einen Steuerschieber (66), der mit einer Verlängerung (76) versehen ist, die sich in die zweite Steuerkammer hinein in Richtung auf den Druckminderschieber erstreckt.

5. Vorrichtung nach Anspruch 4, dadurch gekennzeichnet, daß die Feder (78) in der zweiten Steuerkammer (72) angeordnet ist und über einen die Verlängerung (76) umgebenden Ring (82) an einer Schulter der Bohrung (36) anliegt.

6. Vorrichtung nach Anspruch 5, dadurch gekennzeichnet, daß der Druckminderschieber (38) und der Steuerschieber (66) jeweils Umfangsnuten (86 ; 88) aufweist.

0 089 292

FIG_1

FIG_2

FIG_3

POMPE (12)

RESERVOIR (10)

VALVE (14)

P2 (16b)

P1 (16a)